# FASCICULE DE BREVET EUROPEEN

(11) **EP 3 807 963 B1**
(45) Date de publication et mention de la délivrance du brevet: **20.07.2022**
(21) Numéro de dépôt: 18739575.1
(22) Date de dépôt: 12.06.2018
(51) Int. Cl.: H02G 1/02

(54) **DISPOSITIF DE POSITIONNEMENT SUR UN CONDUCTEUR ÉLECTRIQUE D'UN MOYEN DE MISE EN PLACE D'UN SYSTEME DE MISE A LA TERRE DE CE CONDUCTEUR ÉLECTRIQUE**
VORRICHTUNG ZUR POSITIONIERUNG, AUF EINEM ELEKTRISCHEN LEITER, VON EINEM HILFSMITTEL ZUR IMPLEMENTIERUNG EINES SYSTEMS ZUR ERDUNG DES BESAGTEN ELEKTRISCHEN LEITERS
DEVICE FOR POSITIONING, ON AN ELECTRICAL CONDUCTOR, A MEANS FOR IMPLEMENTING A SYSTEM FOR GROUNDING SAID ELECTRICAL CONDUCTOR

(43) Date de publication de la demande: 21.04.2021
(73) Titulaire: Fameca, 68170 Rixheim (FR)
(72) Inventeur: CONSTANS, Christian, 68510 Waltenheim (FR)
(74) Mandataire: Cabinet Bleger-Rhein-Poupon
(86) Numéro de dépôt international: PCT/FR2018/000171
(87) Numéro de publication internationale: WO 2019/239016

(56) Documents cités:
- FR-A1- 2 937 191
- JP-A- 2008 042 987

## Description

La présente invention a trait à un dispositif de positionnement, à cheval par-dessus un conducteur électrique d'une ligne électrique aérienne, d'un moyen de mise en place, sur ce conducteur électrique, d'un système de mise à la terre de ce conducteur électrique.

Cette invention concerne le domaine de la fabrication des dispositifs utilisés dans le cadre d'une intervention sur une installation électrique, plus particulièrement sur une ligne électrique aérienne, notamment lorsqu'il s'agit de mettre à la terre les conducteurs électriques d'une telle ligne électrique aérienne.

En fait, cette invention trouvera une application toute particulière lorsqu'il s'agit de mettre en place, sur un tel conducteur électrique, un système de mise à la terre d'un tel conducteur électrique.

L'on connait, d'ores et déjà, des dispositifs de positionnement conçus pour positionner, à cheval par-dessus un tel conducteur électrique, un moyen, qui adopte usuellement la forme d'une corde ou analogue, et qui permet de mettre en place un tel système de mise à la terre sur un tel conducteur électrique.

Un tel dispositif de positionnement comporte une fourche, qui est destinée à être positionnée à l'extrémité d'une perche, et qui comporte deux dents, dont, d'une part, une première dent qui comporte, à son extrémité libre, un moyen de montage en basculement et, d'autre part, une deuxième dent qui comporte, à son extrémité libre, un moyen d'accrochage. Ce dispositif comporte, encore, une corde ainsi qu'un levier qui comporte, d'une part, une première extrémité de laquelle est rendue solidaire la corde et, d'autre part, une deuxième extrémité comportant un moyen d'accrochage complémentaire.

En fait, dans une première phase, ce levier est monté en basculement sur la première dent de la fourche par l'intermédiaire du moyen de montage en basculement. Dans une deuxième phase, la fourche est relevée de sorte que le conducteur électrique coopère avec le levier, provoque le basculement de ce levier vers l'intérieur de la fourche, et s'engage entre les dents de la fourche et à l'intérieur de cette fourche. Dans une troisième phase et sous l'impulsion d'une traction exercée sur la corde, on provoque le basculement du levier vers l'extérieur de la fourche et la coopération du moyen d'accrochage de la deuxième dent de la fourche avec le moyen d'accrochage complémentaire du levier. Dans une quatrième phase, on abaisse la fourche en sorte que le conducteur électrique, situé à l'intérieur de la fourche, provoque le dégagement du levier par rapport au moyen de montage en basculement de la première dent de la fourche et le basculement de ce levier vers l'extérieur de la fourche, ceci autour du moyen d'accrochage de la deuxième dent de la fourche. Dans une cinquième phase, la corde est positionnée à cheval par-dessus le conducteur électrique. Finalement, on amène la fourche au sol, on raccorde une extrémité de la corde à un système de mise à la terre et on exerce une traction sur l'autre extrémité de cette corde pour amener ce système de mise à la terre au niveau du conducteur électrique et pour provoquer l'accrochage de ce système sur ce conducteur électrique.

Ce dispositif de positionnement présente, cependant, de nombreux inconvénients. En particulier, pendant pratiquement toutes les phases de mise en oeuvre de ce dispositif de positionnement, il est nécessaire d'exercer une traction sur la corde afin de maintenir celle-ci tendue. En l'absence de traction, le levier a tendance à s'échapper du moyen de montage en basculement et le moyen d'accrochage complémentaire a tendance à ne plus coopérer avec le moyen d'accrochage. Ceci a pour effet que la corde s'échappe du dispositif de positionnement et retombe au sol sans avoir été positionnée par-dessus le conducteur électrique.

Un autre inconvénient consiste en ce que la fourche est manipulée à une hauteur importante de sorte qu'il est difficile de constater visuellement l'accomplissement approprié d'une phase de mise en oeuvre du dispositif, ceci pour pouvoir passer à une autre phase de cette mise en oeuvre.

Les documents FR2937191A1 et JP2008042987A, par exemple, ont trait à des dispositifs pour la mise à la terre d'un conducteur électrique d'une ligne électrique aérienne.

La présente invention se veut de remédier aux inconvénients des dispositifs de l'état de la technique.

A cet effet, l'invention concerne un dispositif de positionnement, à cheval par-dessus un conducteur électrique d'une ligne électrique aérienne, d'un moyen de mise en place, sur ce conducteur électrique, d'un système de mise à la terre de ce conducteur électrique. Ce dispositif de positionnement comporte :
- une partie distale, une partie proximale, et une partie médiane, interposée entre la partie distale et la partie proximale ;
- un moyen de mise en place, que comportent au moins la partie distale et la partie médiane du dispositif de positionnement, et qui est configuré pour mettre en place le système de mise à la terre sur le conducteur électrique ;
- un lest, que comporte la partie distale du dispositif de positionnement, et qui est associé au moyen de mise en place ;
- un moyen de retenue, que comporte la partie distale du dispositif de positionnement, qui est configuré pour retenir le lest au sein du dispositif de positionnement, et qui est mobile entre une position active de retenue de ce lest et une position inactive de retenue de ce lest ;
- un moyen de rappel, que comporte la partie distale et/ou la partie médiane du dispositif de positionnement, et qui est configuré pour rappeler le moyen de retenue du lest, ceci à partir de la position active de retenue du lest et vers la position inactive de retenue du lest ;
- un moyen de maintien, que comporte la partie distale et/ou la partie médiane du dispositif de positionnement, qui est configuré pour maintenir le moyen de retenue dans la position active de retenue du lest, ceci à l'encontre de l'action du moyen de rappel, et qui est mobile entre une position active de maintien du moyen de retenue dans cette position active de retenue du lest et une position inactive de maintien de ce moyen de retenue ;
- un moyen de commande, que comporte la partie médiane du dispositif de positionnement, et qui est configuré pour commander le déplacement du moyen de maintien à partir de la position active de maintien du moyen de retenue dans la position active de retenue du lest vers la position inactive de maintien du moyen de retenue, ceci sous l'impulsion d'une coopération avec le conducteur électrique.

Selon une autre caractéristique, le moyen de mise en place est réalisé en un matériau isolant électrique et est constitué par un câble, une corde, un fil, un filin ou analogue.

Encore une autre caractéristique concerne le fait que le dispositif s'étend selon un axe. Ceci étant, au moins une partie du moyen de mise en place s'étend axialement selon une direction parallèle à l'axe selon lequel s'étend le dispositif. De manière alternative ou additionnelle, le moyen de retenue est mobile en translation axiale selon une direction parallèle à l'axe selon lequel s'étend le dispositif. De manière alternative ou additionnelle, le moyen de maintien et/ou le moyen de commande sont mobiles en rotation autour d'un axe perpendiculaire à l'axe selon lequel s'étend le dispositif.

Ainsi, le dispositif de positionnement comporte un moyen de commande qui, sous l'impulsion d'une coopération avec le conducteur électrique, commande le moyen de maintien qui passe d'une position active de maintien du moyen de retenue dans la position active de retenue du lest à une position inactive de maintien de ce moyen de retenue. Dans cette position inactive de maintien, ce moyen de retenue est libéré et le moyen de rappel provoque le déplacement de ce moyen de retenue à partir d'une position active de retenue du lest vers une position inactive de retenue dans laquelle ce moyen de retenue libère le lest. Sous l'effet de la gravité, ce lest entraîne, jusqu'au sol, le moyen de mise en place qui est, alors, positionné à cheval par-dessus le conducteur électrique.

Un autre avantage consiste en ce que, sous l'impulsion d'une coopération avec un conducteur électrique, le moyen de commande est déclenché de manière automatique, le moyen de maintien est désactivé de manière automatique, le moyen de rappel est actionné de manière automatique et le moyen de retenue libère le lest de manière automatique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

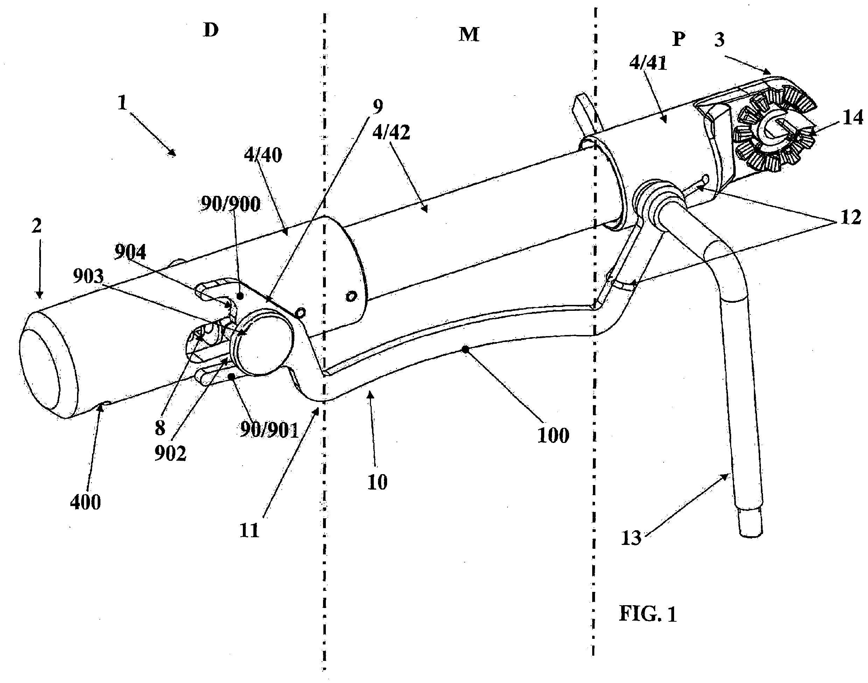

- la figure 1 est une vue schématisée et en perspective du dispositif de positionnement conforme à l'invention ;
- la figure 2 est une vue schématisée, de côté et en écorché du dispositif de positionnement conforme à l'invention, ceci en l'absence de coopération du moyen de commande de ce dispositif avec un conducteur électrique ;
- la figure 3 est une vue similaire à la figure 2, ceci en cas de coopération du moyen de commande du dispositif avec un conducteur électrique.

La présente invention concerne le domaine de la fabrication des dispositifs utilisés dans le cadre d'une intervention sur une installation électrique, plus particulièrement sur une ligne électrique aérienne, notamment lorsqu'il s'agit de mettre à la terre les conducteurs électriques d'une telle ligne électrique aérienne.

L'invention concerne, alors, un dispositif de positionnement, à cheval par-dessus un conducteur électrique C d'une ligne électrique aérienne, d'un moyen de mise en place d'un système de mise à la terre d'un tel conducteur électrique C.

Un tel dispositif de positionnement 1 comporte une partie distale D, une partie proximale P, et une partie médiane M interposée entre la partie distale D et la partie proximale P. Ces parties distale D, médiane M, et proximale P s'étendent successivement le long de ce dispositif de positionnement 1, ceci entre une extrémité libre 2 et une extrémité de réception 3 que comporte ce dispositif de positionnement 1.

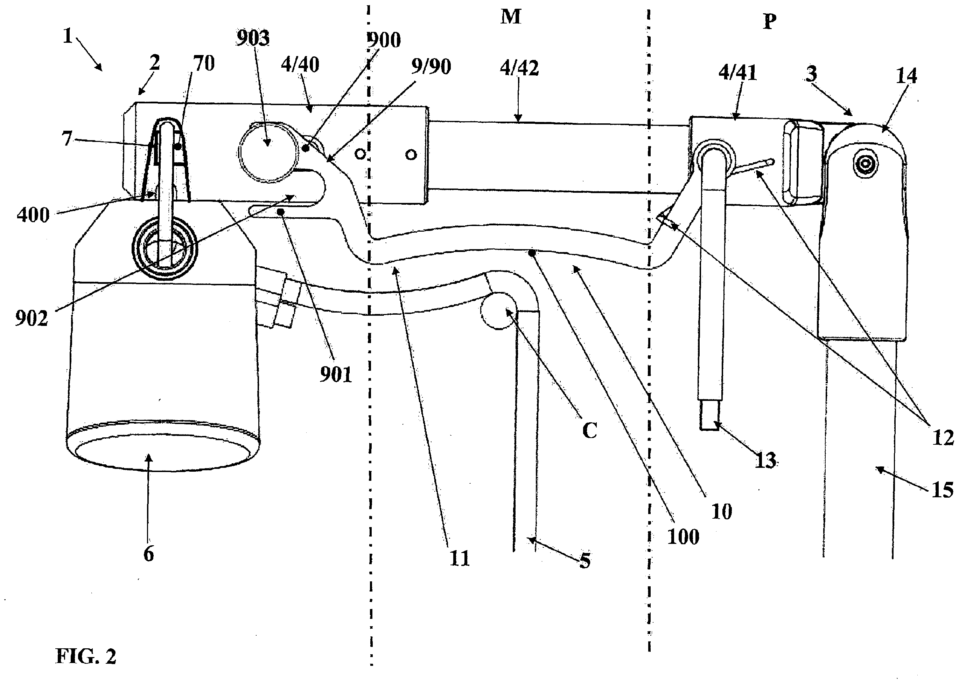

A ce propos, on observera que, en vue du positionnement (à cheval par-dessus un conducteur électrique C) d'un moyen de mise en place d'un système de mise à la terre d'un tel conducteur électrique C, d'une part, la partie médiane M de ce dispositif de positionnement 1 est destinée à être positionnée au-dessus du conducteur électrique C et à l'aplomb de ce conducteur électrique C, d'autre part, la partie distale D est destinée à être positionnée d'un côté de ce conducteur électrique C (notamment au-dessus de ce conducteur électrique C) et, d'autre part encore, la partie proximale P est destinée à être positionnée de l'autre côté de ce conducteur électrique C (notamment au-dessus de ce conducteur électrique c), ceci tel que visible figure 2.

Une autre caractéristique concerne le fait que ce dispositif de positionnement 1 s'étend selon un axe.

Encore une autre caractéristique concerne le fait que ce dispositif de positionnement 1 comporte un corps 4 que comportent la partie distale D, la partie proximale P et la partie médiane M de ce dispositif de positionnement 1. Ce corps 4 s'étend selon un axe qui est au moins parallèle à celui selon lequel s'étend le dispositif de positionnement 1. De plus, ce corps 4 adopte une forme allongée, notamment tubulaire.

On observera que ce corps 4 comporte, d'une part, une première portion d'extrémité 40, que comporte au moins la partie distale D du dispositif de positionnement 1 (voire encore la partie médiane M de ce dispositif de positionnement 1), qui comporte l'extrémité libre 2 du dispositif de positionnement 1, et qui est réalisée en un matériau isolant électrique, notamment en polyoxyméthylène (POM).

D'autre part, ce corps 4 comporte une deuxième portion d'extrémité 41, que comporte au moins la partie proximale P du dispositif de positionnement 1, qui est opposée à la première portion d'extrémité 40, qui comporte l'extrémité de réception 3, et qui est réalisée en un matériau isolant électrique, notamment en polyamide.

D'autre part encore, ce corps 4 comporte une portion intermédiaire 42, que comporte au moins la partie médiane M du dispositif de positionnement 1 (voire encore la partie proximale P de ce dispositif de positionnement 1), qui est interposée entre la première portion d'extrémité 40 et la deuxième portion d'extrémité 41, et qui réalisée en un matériau isolant électrique, notamment en un matériau composite.

On observera que cette première portion d'extrémité 40, cette portion intermédiaire 42 et cette deuxième portion d'extrémité 41 s'étendent successivement le long du corps 4, ceci entre l'extrémité libre 2 et l'extrémité de réception 3 du dispositif de positionnement 1.

Une autre caractéristique consiste en ce que le dispositif de positionnement 1 comporte un moyen de mise en place 5 qui est configuré pour mettre en place, sur un conducteur électrique C, un système de mise à la terre (non représenté) de ce conducteur électrique C. En fait et de manière connue, un tel système de mise à la terre comporte, usuellement, d'une part, un crochet qui vient s'accrocher sur le conducteur électrique C et, d'autre part, une pince (usuellement incorporée à l'intérieur du crochet) qui vient pincer ledit conducteur électrique C.

Il convient d'observer que ce sont au moins la partie distale D et la partie médiane M (voire encore, et selon un mode de réalisation particulier non représenté, la partie proximale P) du dispositif de positionnement 1 qui comportent un tel moyen de mise en place 5.

Tel que visible sur les figures en annexe, le moyen de mise en place 5 s'étend latéralement par rapport au corps 4, extérieurement par rapport à ce corps 4, et le long de ce corps 4, ceci au moins sur une partie de la longueur de ce corps 4.

A ce propos, on observera que ce moyen de mise en place 5 s'étend, en fait, d'une part, le long de ce corps 4, ceci au moins dans la partie distale D et dans la partie médiane M du dispositif de positionnement 1 (voire encore, et selon un mode de réalisation particulier non représenté, en partie dans la partie proximale P de ce dispositif de positionnement 1) et, d'autre part, en divergeant par rapport à ce corps 4, ceci dans la partie médiane M ou dans la partie proximale P de ce dispositif de positionnement 1.

De manière alternative ou (et de préférence) additionnelle, ce moyen de mise en place 5 s'étend, le long du corps 4, d'une part, au moins sur une partie de la longueur de la première portion d'extrémité 40 du corps 4 et, d'autre part, au moins sur une partie de la longueur de la portion intermédiaire 42 du corps 4. Selon un mode particulier de réalisation (non représenté), ce moyen de mise en place 5 s'étend sur l'intégralité de la longueur de la portion intermédiaire 42 du corps ainsi que sur une partie de la longueur de la deuxième portion d'extrémité 41 de ce corps 4.

De plus, ce moyen de mise en place 5 s'étend en divergeant à partir du corps 4, plus particulièrement (et de préférence) à partir de la portion intermédiaire 42, voire à partir de la deuxième portion d'extrémité 41 de ce corps 4 (solution non représentée).

Une autre caractéristique concerne le fait que le moyen de mise en place 5 est réalisé en un matériau isolant électrique et est constitué par un câble, une corde, un fil, un filin ou analogue.

Une autre caractéristique concerne le fait que le dispositif de positionnement 1 comporte un lest 6, que comporte la partie distale D de ce dispositif de positionnement 1, et qui est associé au moyen de mise en place 5.

En fait, ce lest 6 est positionné au niveau de la première portion d'extrémité 40 du corps 4. Ce lest 6 est destiné à être positionné d'un côté du conducteur électrique C, ceci lors de la mise en oeuvre du dispositif de positionnement 1, avant le positionnement du moyen de mise en place 5 à cheval par-dessus ce conducteur électrique C, et en vue d'un tel positionnement.

De plus, on observera que ce lest 6 est, en fait, rendu solidaire d'une extrémité libre 50 que comporte le moyen de mise en place 5.

Une autre caractéristique concerne le fait que le dispositif de positionnement 1 comporte un moyen de retenue 7, que comporte la partie distale D du dispositif de positionnement 1, de préférence que comporte la première portion d'extrémité 40 du corps 4.

Selon un mode préféré de réalisation, cette première portion d'extrémité 40 du corps 4 comporte, alors, d'une part et intérieurement, un tel moyen de retenue 7 et, d'autre part, une ouverture 400 au travers de laquelle ce moyen de retenue 7 est accessible.

Un tel moyen de retenue 7 est configuré pour retenir le lest 6 au sein du dispositif de positionnement 1, notamment au sein ou au niveau de la partie distale D du dispositif de positionnement 1, de préférence au sein ou au niveau de la première portion d'extrémité 40 du corps 4.

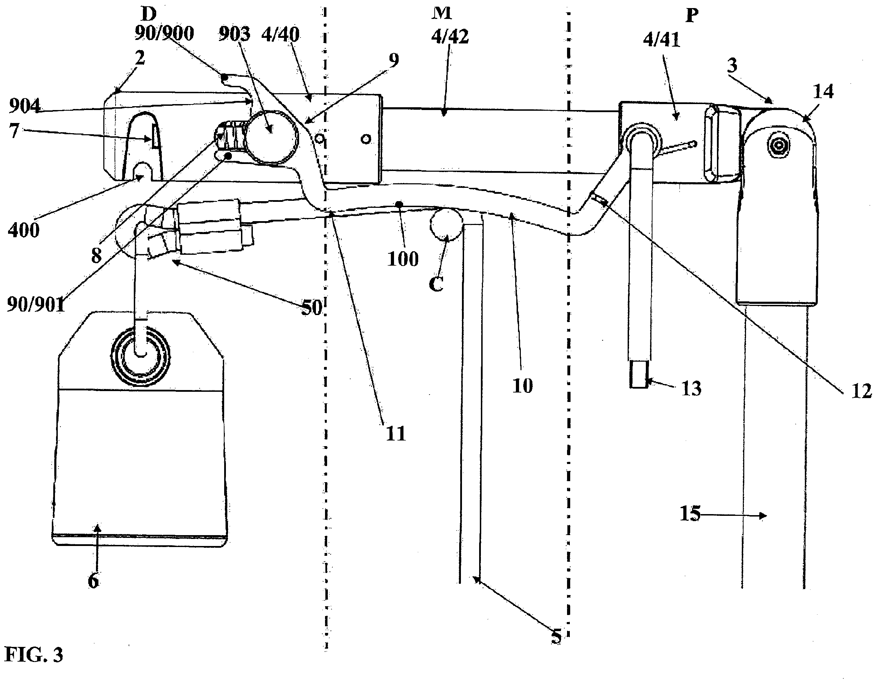

Ce moyen de retenue 7 est mobile entre une position active de retenue du lest 6 (dans laquelle le lest 6 est retenu au sein du dispositif de positionnement 1, figure 2) et une position inactive de retenue de ce lest 6 (dans laquelle le lest 6 est libéré et peut retomber au sol par gravité et sous l'effet de la pesanteur, figure 3).

En fait, ce moyen de retenue 7 est mobile par rapport à la partie distale D du dispositif de positionnement 1 (notamment au sein de cette partie distale D), de préférence par rapport à la première portion d'extrémité 40 du corps 4 (notamment à l'intérieur de cette première portion d'extrémité 40 du corps 4) .

De plus, un tel moyen de retenue 7 est mobile en translation axiale, ceci selon un axe au moins parallèle à l'axe selon lequel s'étend le corps 4 et/ou au moins parallèle à l'axe selon lequel s'étend le dispositif de positionnement 1.

Selon un mode préféré de réalisation, le moyen de retenue 7 comporte un organe de retenue 70, notamment sous forme d'un doigt de retenue.

C'est, plus particulièrement, avec un tel moyen de retenue 7 que coopère un moyen d'accrochage (notamment un mousqueton ou analogue) que comporte le lest 6.

Encore une autre caractéristique concerne le fait que le dispositif de positionnement 1 comporte un moyen de rappel 8 que comporte la partie distale D et/ou la partie médiane M du dispositif de positionnement 1.

De préférence, c'est la première portion d'extrémité 40 du corps 4 qui comporte (de préférence intérieurement) un tel moyen de rappel 8.

Un tel moyen de rappel 8 est configuré pour rappeler le moyen de retenue 7 du lest 6, ceci à partir de la position active de retenue de ce lest 6 (par ce moyen de retenue 7) et vers la position inactive de retenue de ce lest 6 (par ce moyen de retenue 7).

De préférence, un tel moyen de rappel 8 adopte la forme d'un ressort et/ou est positionné à l'intérieur de la première portion d'extrémité 40 du corps 4.

Une caractéristique additionnelle consiste en ce que le dispositif de positionnement 1 comporte, aussi, un moyen de maintien 9 que comporte la partie distale D et/ou la partie médiane M du dispositif de positionnement (1).

Selon un mode de réalisation préféré, c'est la partie distale D du dispositif de positionnement 1 qui comporte un tel moyen de maintien 9. Ce moyen de maintien 9 s'étend extérieurement et/ou latéralement par rapport au corps 4, ceci sur une partie de la longueur de ce corps 4, notamment sur au moins une partie de la longueur de la première portion d'extrémité 40 de ce corps 4.

Ce moyen de maintien 9 est configuré pour maintenir le moyen de retenue 7 dans la position active de retenue du lest 6 (par ce moyen de retenue 7), ceci à l'encontre de l'action du moyen de rappel 8.

Ce moyen de maintien 9 est mobile entre une position active de maintien du moyen de retenue 7 dans sa position active de retenue du lest 6 (figure 2) et une position inactive de maintien de ce moyen de retenue 7 dans sa position active de retenue du lest 6 (figure 3).

Dans la position active de maintien du moyen de retenue 7 par le moyen de maintien 9, ce moyen de retenue 7 est maintenu (par ce moyen de maintien 9) dans sa position active de retenue du lest 6 et retient ce lest 6 au sein du dispositif de positionnement 1 (figure 2). Dans la position inactive de maintien du moyen de retenue 7 par le moyen de maintien 9, ce moyen de retenue 7 est libéré et est rappelé, par le moyen de rappel 8, vers sa position inactive de retenue du lest 6 dans laquelle ce lest 6 est libéré (figure 3).

Le moyen de maintien 9 comporte une fourche 90 qui comporte deux dents (900, 901) qui délimitent un berceau 902 pour la réception d'un organe complémentaire de maintien 903, ceci en position inactive de maintien du moyen de retenue 7 (figure 3). On observera que cet organe complémentaire de maintien 903 est solidaire en déplacement du moyen de retenue 7 et s'étend extérieurement au corps 4 et au travers d'une paroi de ce corps 4, de préférence extérieurement à la première portion d'extrémité 4 de ce corps 4 et au travers d'une paroi de cette première portion d'extrémité 4 de corps 4.

L'une 900 des dents (900, 901) de la fourche 90 comporte un organe de maintien 904 (de préférence sous forme d'une butée) avec lequel coopère l'organe complémentaire de maintien 903, ceci en position active de maintien du moyen de retenue 7.

Encore une autre caractéristique concerne le fait que le dispositif de positionnement 1 comporte un moyen de commande 10 que comporte la partie médiane M du dispositif de positionnement 1.

En fait, un tel moyen de commande 10 s'étend extérieurement et/ou latéralement par rapport au corps 4, ceci sur une partie de la longueur de ce corps 4, notamment sur au moins une partie de la longueur de la portion intermédiaire 42 de ce corps 4, voire encore sur une partie de la longueur de la première portion d'extrémité 40 de ce corps 4.

Ce moyen de commande 10 est configuré pour commander le déplacement du moyen de maintien 9 à partir de la position active de maintien du moyen de retenue 7 dans la position active de retenue du lest 6 (figure 2) vers la position inactive de maintien du moyen de retenue 7 dans la position active de retenue du -lest 6 (figure 3), ceci sous l'impulsions d'une coopération avec le conducteur électrique C.

Tel que visible sur les figures en annexe, un tel moyen de commande 10 comporte un berceau 100, qui est configuré pour recevoir le conducteur électrique C, qui présente une forme arquée, et qui présente une ouverture orientée en direction de l'extérieur du dispositif de positionnement 1.

En fait, ce moyen de commande 10 adopte la forme d'un arceau qui présente une courbure orientée en direction du corps 4.

Un tel moyen de commande 10 permet, avantageusement, d'une part, d'assurer une coopération appropriée entre le conducteur électrique C et le moyen de commande 10 et, d'autre part, d'éviter à un tel conducteur électrique C de se dégager par rapport audit moyen de commande 10.

Une autre caractéristique consiste en ce que le moyen de maintien 9 et/ou le moyen de commande 10 sont mobiles en rotation autour d'un axe perpendiculaire à l'axe selon lequel s'étend le corps 4 et/ou autour d'un axe perpendiculaire à l'axe selon lequel s'étend le dispositif de positionnement 1.

Tel que visible sur les figures en annexe, ce moyen de maintien 9 et/ou ce moyen de commande 10 sont montés en rotation sur le corps 4, de préférence sur la deuxième portion d'extrémité 41 de ce corps 4.

De plus et selon un mode de réalisation préféré de l'invention, le dispositif de positionnement 1 comporte un levier 11 qui comporte, d'une part, le moyen de maintien 9 et, d'autre part, le moyen de commande 10 qui se situe dans le prolongement de ce moyen de maintien 9.

A ce propos, on observera que ce levier 11 est mobile en rotation autour d'un axe perpendiculaire à l'axe selon lequel s'étend le corps 4 et/ou autour d'un axe perpendiculaire à l'axe selon lequel s'étend le dispositif de positionnement 1. En fait, ce levier 11 est monté en rotation selon un tel axe, ceci sur le corps 4 (plus particulièrement sur la deuxième portion d'extrémité 41 de ce corps 4). Ceci étant, le moyen de maintien 9 et le moyen de commande 10 (que comporte un tel levier 11) sont, alors, montés en rotation sur ce corps 4 (plus particulièrement sur la deuxième portion d'extrémité 41 de ce corps 4), ceci tel que susmentionné.

Encore une autre caractéristique concerne le fait que le dispositif de positionnement 1 comporte un moyen de rappel additionnel 12 qui est configuré pour rappeler au moins le moyen de maintien 9 à partir de la position inactive de maintien du moyen de retenue 7 dans la position active de retenue du lest 6 (figure 3) vers la position active de maintien de ce moyen de retenue 7 (figure 2).

En fait, ce moyen de rappel additionnel 12 est, plus particulièrement, configuré pour rappeler le levier 11 (qui comporte un tel moyen de maintien 9) à partir de cette position inactive de maintien vers cette position active de maintien de ce moyen de retenue 7.

La présence de ce moyen de rappel additionnel 12 permet, avantageusement, de faciliter la mise en place du lest 6 au sein du dispositif de positionnement 1, plus particulièrement d'assurer la retenue de ce lest 6 par le moyen de retenue 7, ceci en agissant uniquement sur l'organe complémentaire de maintien 903 (solidaire en déplacement de ce moyen de retenue 7) pour amener ce moyen de retenue 7 de la position inactive de retenue du lest 6 à la position active de retenue de ce lest 6. En agissant de la sorte sur l'organe complémentaire de maintien 903, le moyen de rappel additionnel 12 provoque automatiquement le passage du moyen de maintien 9 de la position inactive de maintien du moyen de retenue 7 vers la position active de maintien de ce moyen de retenue 7.

Tel que mentionné ci-dessus, le moyen de commande 10 est configuré pour commander le déplacement du moyen de maintien 9 à partir de la position active de maintien du moyen de retenue 7 dans la position active de retenue du lest 6 (figure 2) vers la position inactive de maintien de ce moyen de retenue 7 (figure 3). A ce propos, on observera que ce moyen de commande 10 est, alors, configuré pour commander un tel déplacement, ceci à l'encontre de l'action du moyen de rappel additionnel 12.

Encore une autre caractéristique concerne le fait que le dispositif de positionnement 1 comporte un moyen de montage 13 d'un détecteur de tension (non représenté) qui peut adopter la forme d'un vérificateur d'absence de tension (dit VAT).

En fait, c'est, plus particulièrement, la partie proximale P du dispositif de positionnement 1 qui comporte un tel moyen de montage 13. Selon un mode de réalisation préféré, c'est la deuxième portion d'extrémité 41 du corps 4 qui comporte un tel moyen de montage 13.

Tel que visible sur les figures en annexe, un tel moyen de montage 13 comporte une potence, qui est configurée pour éloigner ledit détecteur de tension par rapport au corps 4, et qui comporte, d'une part, une extrémité fixe qui est rendue solidaire du corps 4 (plus particulièrement de la deuxième portion d'extrémité 41 de ce corps 2) par l'intermédiaire de moyens de solidarisation et, d'autre part, une extrémité libre pourvue d'un moyen de fixation (notamment un filetage) pour la fixation (notamment par vissage) d'un tel détecteur de tension.

Selon un mode préféré de réalisation, le moyen de maintien 9 et/ou le moyen de commande 10 et/ou le levier 11 sont montés en rotation sur ce moyen de montage 13, plus particulièrement sur une portion de la potence, que comporte un tel moyen de montage 13, et qui constitue un tronçon d'arbre.

Une autre caractéristique concerne le fait que le dispositif de positionnement 1 comporte (notamment à proximité ou au niveau de l'extrémité de réception 3) un moyen de réception 14 d'une perche de manoeuvre 15.

En fait, c'est, plus particulièrement, la partie proximale P du dispositif de positionnement 1 qui comporte un tel moyen de réception 14. Selon un mode de réalisation préféré, c'est la deuxième portion d'extrémité 41 du corps 4 qui comporte un tel moyen de réception 14.

On observera que ce moyen de réception 14 est configuré pour recevoir une telle perche de manoeuvre 15 dans différentes positions angulaires par rapport au corps 4.

L'invention concerne, également, une installation I qui comporte, d'une part, un dispositif de positionnement 1 qui présente les caractéristiques décrites ci-dessus et, d'autre part, au moins un conducteur électrique C d'une ligne électrique aérienne.

Dans une première configuration de cette installation I illustrée figure 2, le conducteur électrique C coopère avec le moyen de commande 10 (plus particulièrement avec le berceau 100 de ce moyen de commande 10), ceci en vue du positionnement, à cheval par-dessus ce conducteur électrique C, du moyen de mise en place 3, sur ce conducteur électrique C, d'un système de mise à la terre de ce conducteur électrique C.

Dans une autre configuration de cette installation I illustrée figure 3, le moyen de mise en place 3 est positionné à cheval par-dessus le conducteur électrique C.

Dans la suite de la description il sera décrit la mise en œuvre du dispositif de positionnement 1 conforme à l'invention.

Lorsqu'il s'agit de positionner, à cheval par-dessus un conducteur électrique C d'une ligne électrique aérienne, un moyen de mise en place 5 d'un système de mise à la terre, on positionne, tout d'abord, ce dispositif de positionnement 1 au-dessus d'un tel conducteur électrique C (à l'aplomb de ce conducteur électrique c), ceci en sorte que, d'une part, la partie médiane M du dispositif de positionnement 1 et/ou le moyen de commande 10 soient positionnés au-dessus (à l'aplomb) de ce conducteur électrique C, d'autre part, la partie distale D du dispositif de positionnement 1 soit positionnée d'un côté de ce conducteur électrique C et, d'autre part encore, la partie proximale P de ce dispositif de positionnement 1 soit positionnée de l'autre côté de ce conducteur électrique C. On abaisse, ensuite, ce dispositif de positionnement 1 pour assurer la coopération du moyen de commande 10 avec ce conducteur électrique C. On poursuit l'abaissement du dispositif de positionnement 1 en sorte que le conducteur électrique C provoque le déplacement (rotation) du moyen de commande 10. Sous l'effet de ce déplacement du moyen de commande 10, ce moyen de commande 10 commande le déplacement (rotation) du moyen de maintien 9 qui passe d'une position active de maintien du moyen de retenue 7 (dans une position active de retenue du lest 6) à une position inactive de maintien de ce moyen de retenue 7 dans laquelle ce moyen de retenue 7 est libéré. Dans cette position inactive de maintien du moyen de retenue 7, le moyen de rappel 8 provoque le déplacement (translation axiale) du moyen de retenue 7 qui passe d'une position active de retenue du lest 6 à une position inactive de retenue de ce lest 6 dans laquelle ce lest 6 est libéré. Sous l'effet de la gravité, ce lest 6 tombe au sol et entraîne avec lui le moyen de mise en place 5 qui est, alors, positionné à cheval par-dessus ce conducteur électrique C.

En fixant un système de mise à la terre à une extrémité de ce moyen de mise en place 5 et en exerçant une traction sur une autre extrémité de ce moyen de mise en place 5, on amène ce système de mise à la terre au niveau du conducteur électrique C et on assure un accrochage de ce système de mise à la terre sur ce conducteur électrique C.

## Revendications

1. Dispositif de positionnement (1), à cheval par-dessus un conducteur électrique (C) d'une ligne électrique aérienne, d'un moyen de mise en place (5), sur ce conducteur électrique (C), d'un système de mise à la terre de ce conducteur électrique (C), ce dispositif de positionnement (1) comporte :
- une partie distale (D), une partie proximale (P), et une partie médiane (M), interposée entre la partie distale (D) et la partie proximale (P) ;
- un moyen de mise en place (5), que comportent au moins la partie distale (D) et la partie médiane (M) du dispositif de positionnement (1), et qui est configuré pour mettre en place le système de mise à la terre sur le conducteur électrique (C) ;
- un lest (6), que comporte la partie distale (D) du dispositif de positionnement (1), et qui est associé au moyen de mise en place (5) ;
- un moyen de retenue (7), que comporte la partie distale (D) du dispositif de positionnement (1), qui est configuré pour retenir le lest (6) au sein du dispositif de positionnement (1), et qui est mobile entre une position active de retenue de ce lest (6) et une position inactive de retenue de ce lest (6) ;
- un moyen de rappel (8), que comporte la partie distale (D) et/ou la partie médiane (M) du dispositif de positionnement (1), et qui est configuré pour rappeler le moyen de retenue (7) du lest (6), ceci à partir de la position active de retenue du lest (6) et vers la position inactive de retenue du lest (6) ;
- un moyen de maintien (9), que comporte la partie distale (D) et/ou la partie médiane (M) du dispositif de positionnement (1), qui est configuré pour maintenir le moyen de retenue (7) dans la position active de retenue du lest (6), ceci à l'encontre de l'action du moyen de rappel (8), et qui est mobile entre une position active de maintien du moyen de retenue (7) dans sa position active de retenue du lest (6) et une position inactive de maintien de ce moyen de retenue (7) ;
- un moyen de commande (10), que comporte la partie médiane (M) du dispositif de positionnement (1), et qui est configuré pour commander le déplacement du moyen de maintien (9) à partir de la position active de maintien du moyen de retenue (7) dans la position active de retenue du lest (6) vers la position inactive de maintien du moyen de retenue (7), ceci sous l'impulsion d'une coopération avec le conducteur électrique (C).

2. Dispositif de positionnement (1) selon la revendication 1, **caractérisé par le fait qu'**il comporte un corps (4), qui adopte une forme allongée, qui s'étend selon un axe, et que comportent la partie distale (D), la partie proximale (P) et la partie médiane (M) du dispositif de positionnement (1).

3. Dispositif de positionnement (1) selon la revendication 2, **caractérisé par le fait que** le corps (4) comporte, d'une part, une première portion d'extrémité (40), que comporte au moins la partie distale (D) du dispositif de positionnement (1), d'autre part, une deuxième portion d'extrémité (41), que comporte au moins la partie proximale (P) du dispositif de positionnement (1), et qui est opposée à la première portion d'extrémité (40) et, d'autre part encore, une portion intermédiaire (42), que comporte au moins la partie médiane (M) du dispositif de positionnement (1), et qui est interposée entre la première portion d'extrémité (40) et la deuxième portion d'extrémité (41) du corps (4).

4. Dispositif de positionnement (1) selon la revendication 3, **caractérisé par le fait que** la première portion d'extrémité (40) et/ou la deuxième portion d'extrémité (41) et/ou la portion intermédiaire (42) sont réalisées en un matériau isolant électrique.

5. Dispositif de positionnement (1) selon la revendication 2, **caractérisé par le fait que** le moyen de mise en place (5) s'étend latéralement par rapport au corps (4), extérieurement par rapport à ce corps (4), et le long de ce corps (4), ceci au moins sur une partie de la longueur de ce corps (4).

6. Dispositif de positionnement (1) selon la revendication 2, **caractérisé par le fait que** le moyen de mise en place (5) s'étend, d'une part, le long du corps (4), ceci au moins dans la partie distale (D) et dans la partie médiane (M) du dispositif de positionnement (1) et, d'autre part, en divergeant par rapport à ce corps (4), ceci dans la partie médiane (M) ou dans la partie proximale (P) de ce dispositif de positionnement 1.

7. Dispositif de positionnement (1) selon l'une quelconque des revendications précédentes, **caractérisé par le fait que** le moyen de mise en place (5) est réalisé en un matériau isolant électrique et est constitué par un câble, une corde, un fil, un filin ou analogue.

8. Dispositif de positionnement (1) selon la revendication 2, **caractérisé par le fait que** le moyen de retenue (7) est mobile en translation axiale selon un axe au moins parallèle à l'axe selon lequel s'étend le corps (4) et/ou au moins parallèle à un axe selon lequel s'étend le dispositif de positionnement (1).

9. Dispositif de positionnement (1) selon la revendication 3, **caractérisé par le fait que** la première portion d'extrémité (40) du corps (4) comporte, d'une part et intérieurement, le moyen de retenue (7) et, d'autre part, une ouverture (400) au travers de laquelle ce moyen de retenue (7) est accessible.

10. Dispositif de positionnement (1) selon la revendication 3, **caractérisé par le fait que** la première portion d'extrémité (40) du corps (4) comporte, intérieurement, le moyen de rappel (8).

11. Dispositif de positionnement (1) selon l'une quelconque des revendications précédentes, **caractérisé par le fait que** le moyen de maintien (9) comporte une fourche (90) qui comporte deux dents (900, 901), d'une part, qui délimitent un berceau (902) pour la réception d'un organe complémentaire de maintien (903), qui est solidaire en déplacement du moyen de retenue (7), ceci en position inactive de maintien du moyen de retenue (7) et, d'autre part, dont l'une (900) comporte un organe de maintien (904) avec lequel coopère l'organe complémentaire de maintien (903), ceci en position active de maintien du moyen de retenue (7).

12. Dispositif de positionnement (1) selon l'une quelconque des revendications précédentes, **caractérisé par le fait que** le moyen de commande (10) comporte un berceau (100), qui est configuré pour recevoir le conducteur électrique (c), qui présente une forme arquée, et qui présente une ouverture orientée en direction de l'extérieur du dispositif de positionnement (1).

13. Dispositif de positionnement (1) selon la revendication 2, **caractérisé par le fait que** le moyen de maintien (9) et le moyen de commande (10) s'étendent extérieurement et/ou latéralement par rapport au corps (4), ceci sur une partie de la longueur de ce corps (4).

14. Dispositif de positionnement (1) selon la revendication 2, **caractérisé par le fait que** le moyen de maintien (9) et/ou le moyen de commande (10) sont mobiles en rotation autour d'un axe perpendiculaire à l'axe selon lequel s'étend le corps (4) et/ou autour d'un axe perpendiculaire à un axe selon lequel s'étend le dispositif de positionnement (1).

15. Dispositif de positionnement (1) selon la revendication 2, **caractérisé par le fait que** le moyen de maintien (9) et/ou le moyen de commande (10) sont montés en rotation sur le corps (4).

16. Dispositif de positionnement (1) selon l'une quelconque des revendications précédentes, **caractérisé par le fait qu'**il comporte un levier (11) qui comporte, d'une part, le moyen de maintien (9) et, d'autre part, le moyen de commande (10) qui se situe dans le prolongement de ce moyen de maintien (9) .

17. Dispositif de positionnement (1) selon les revendications 2 et 16, **caractérisé par le fait que** le levier (11) est mobile en rotation autour d'un axe perpendiculaire à l'axe selon lequel s'étend le corps (4) et/ou autour d'un axe perpendiculaire à un axe selon lequel s'étend le dispositif de positionnement (1).

18. Dispositif de positionnement (1) selon l'une quelconque des revendications précédentes, **caractérisé par le fait qu'**il comporte un moyen de rappel additionnel (12) qui est configuré pour rappeler au moins le moyen de maintien (9) à partir de la position inactive de maintien du moyen de retenue (7) dans la position active de retenue du lest (6) vers la position active de maintien de ce moyen de retenue (7).

19. Dispositif de positionnement (1) selon l'une quelconque des revendications précédentes, **caractérisé par le fait qu'**il comporte un moyen de montage (13) d'un détecteur de tension.

20. Dispositif de positionnement (1) selon l'une quelconque des revendications précédentes, **caractérisé par le fait qu'**il comporte un moyen de réception (14) d'une perche de manoeuvre (15).

## Patentansprüche

1. Vorrichtung (1) zum Positionieren, rittlings über einem elektrischen Leiter (C) einer Freileitung, eines Einrichtungsmittels (5) eines Systems für die Erdung dieses elektrischen Leiters (C) auf diesem elektrischen Leiter (C), wobei diese Vorrichtung (1) zum Positionieren Folgendes umfasst:
- einen distalen Teil (D), einen proximalen Teil (P) und einen mittleren Teil (M), der zwischen dem distalen Teil (D) und dem proximalen Teil (P) angeordnet ist;
- ein Einrichtungsmittel (5), das wenigstens den distalen Teil (D) und den mittleren Teil (M) der Vorrichtung (1) zum Positionieren umfasst und das zum Einrichten des Erdungssystems auf dem elektrischen Leiter (C) konfiguriert ist;
- einen Ballast (6), der den distalen Teil (D) der Vorrichtung (1) zum Positionieren umfasst und der dem Einrichtungsmittel (5) zugeordnet ist;
- ein Rückhaltemittel (7), das den distalen Teil (D) der Vorrichtung (1) zum Positionieren umfasst, das zum Halten des Ballasts (6) innerhalb der Vorrichtung (1) zum Positionieren konfiguriert ist, und das zwischen einer aktiven Rückhalteposition dieses Ballasts (6) und einer inaktiven Rückhalteposition dieses Ballasts (6) bewegbar ist;
- ein Rückführmittel (8), das den distalen Teil (D) und/oder den mittleren Teil (M) der Vorrichtung (1) zum Positionieren umfasst und das zum Rückführen des Rückhaltemittels (7) des Ballasts (6) konfiguriert ist, wobei dies von der aktiven Rückhalteposition des Ballasts (6) und zu der inaktiven Rückhalteposition (6) des Ballasts erfolgt;
- ein Haltemittel (9), das den distalen Teil (D) und/oder den mittleren Teil (M) der Vorrichtung (1) zum Positionieren umfasst, das zum Halten des Rückhaltemittels (7) in der aktiven Rückhalteposition des Ballasts (6) konfiguriert ist, wobei dies gegen die Tätigkeit des Rückführmittels (8) erfolgt, und das zwischen einer aktiven Halteposition des Rückhaltemittels (7) in seiner aktiven Rückhalteposition des Ballasts (6) und einer inaktiven Halteposition dieses Rückhaltemittels (7) bewegbar ist;
- ein Steuermittel (10), das den mittleren Teil (M) der Vorrichtung (1) zum Positionieren umfasst und das zum Steuern der Bewegung des Haltemittels (9) von der aktiven Halteposition des Rückhaltemittels (7) in der aktiven Rückhalteposition des Ballasts (6) zu der inaktiven Halteposition des Rückhaltemittels (7) konfiguriert ist, wobei dies unter dem Impuls eines Zusammenwirkens mit dem elektrischen Leiter (C) erfolgt.

2. Vorrichtung (1) zum Positionieren nach Anspruch 1, **dadurch gekennzeichnet, dass** sie einen Körper (4) umfasst, der eine längliche Form annimmt, der sich entlang einer Achse erstreckt und der den distalen Teil (D), den proximalen Teil (P) und den mittleren Teil (M) der Vorrichtung (1) zum Positionieren umfasst.

3. Vorrichtung (1) zum Positionieren nach Anspruch 2, **dadurch gekennzeichnet, dass** der Körper (4) einerseits einen ersten Endabschnitt (40), der wenigstens den distalen Teil (D) der Vorrichtung (1) zum Positionieren und andererseits einen zweiten Endabschnitt (41), der wenigstens den proximalen Teil (P) der Vorrichtung (1) zum Positionieren umfasst, und der dem ersten Endabschnitt (40) gegenüberliegt, und andererseits noch einen Zwischenabschnitt (42) umfasst, der wenigstens den mittleren Teil (M) der Vorrichtung (1) zum Positionieren umfasst und der zwischen dem ersten Endabschnitt (40) und dem zweiten Endabschnitt (41) des Körpers (4) angeordnet ist.

4. Vorrichtung (1) zum Positionieren nach Anspruch 3, **dadurch gekennzeichnet, dass** der erste Endabschnitt (40) und/oder der zweite Endabschnitt (41) und/oder der Zwischenabschnitt (42) aus einem elektrisch isolierenden Material hergestellt ist.

5. Vorrichtung (1) zum Positionieren nach Anspruch 2, **dadurch gekennzeichnet, dass** sich das Einrichtungsmittel (5) seitlich relativ zu dem Körper (4), äußerlich relativ zu diesem Körper (4) und entlang dieses Körpers (4) erstreckt, wobei dies wenigstens auf einem Teil der Länge dieses Körpers (4) erfolgt.

6. Vorrichtung (1) zum Positionieren nach Anspruch 2, **dadurch gekennzeichnet, dass** sich das Einrichtungsmittel (5) einerseits entlang des Körpers (4), wobei dies wenigstens in dem distalen Teil (D) und in dem mittleren Teil (M) der Vorrichtung (1) zum Positionieren erfolgt, und andererseits divergierend relativ zu diesem Körper (4) erstreckt, wobei dies in dem mittleren Teil (M) oder in dem proximalen Teil (P) dieser Vorrichtung (1) zum Positionieren erfolgt.

7. Vorrichtung (1) zum Positionieren nach einem der vorhergehenden Ansprüche, **dadurch gekennzeichnet, dass** das Einrichtungsmittel (5) aus einem elektrisch isolierenden Material hergestellt ist und aus einem Kabel, einer Schnur, einem Draht, einem Seil oder dergleichen besteht.

8. Vorrichtung (1) zum Positionieren nach Anspruch 2, **dadurch gekennzeichnet, dass** das Rückhaltemittel (7) entlang einer Achse axial verschiebbar ist, die wenigstens parallel zu der Achse ist, entlang der sich der Körper (4) erstreckt, und/oder wenigstens parallel zu einer Achse ist, entlang der sich die Vorrichtung (1) zum Positionieren erstreckt.

9. Vorrichtung (1) zum Positionieren nach Anspruch 3, **dadurch gekennzeichnet, dass** der erste Endabschnitt (40) des Körpers (4) einerseits und innerlich das Rückhaltemittel (7) und andererseits eine Öffnung (400) umfasst, durch die dieses Rückhaltemittel (7) zugänglich ist.

10. Vorrichtung (1) zum Positionieren nach Anspruch 3, **dadurch gekennzeichnet, dass** der erste Endabschnitt (40) des Körpers (4) innerlich das Rückführmittel (8) umfasst.

11. Vorrichtung (1) zum Positionieren nach einem der vorhergehenden Ansprüche, **dadurch gekennzeichnet, dass** das Haltemittel (9) eine Gabel (90) umfasst, die zwei Zähne (900, 901), die einerseits ein Gestell (902) zum Aufnehmen eines komplementären Halteinstruments (903) begrenzen, das mit dem Rückhaltemittel (7) einstückig bewegbar ist, wobei dies in der inaktiven Halteposition des Rückhaltemittels (7) erfolgt, und andererseits einer (900) davon ein Halteinstrument (904) umfasst, mit dem das komplementäre Halteinstrument (903) zusammenwirkt, wobei dies in der aktiven Halteposition des Rückhaltemittels (7) erfolgt.

12. Vorrichtung (1) zum Positionieren nach einem der vorhergehenden Ansprüche, **dadurch gekennzeichnet, dass** das Steuermittel (10) ein Gestell (100) umfasst, das zum Aufnehmen des elektrischen Leiters (C) konfiguriert ist, das eine gebogene Form aufweist, und das eine zu der Außenseite der Vorrichtung (1) zum Positionieren gerichtete Öffnung aufweist.

13. Vorrichtung (1) zum Positionieren nach Anspruch 2, **dadurch gekennzeichnet, dass** sich das Haltemittel (9) und das Steuermittel (10) äußerlich und/oder seitlich relativ zu dem Körper (4) erstrecken, wobei dies auf einem Teil der Länge dieses Körpers (4) erfolgt.

14. Vorrichtung (1) zum Positionieren nach Anspruch 2, **dadurch gekennzeichnet, dass** das Haltemittel (9) und/oder das Steuermittel (10) drehbeweglich um eine Achse, die senkrecht zu der Achse ist, die sich entlang des Körpers (4) erstreckt, und/oder um eine Achse ist, die senkrecht zu einer Achse ist, die sich entlang der Vorrichtung (1) zum Positionieren erstreckt.

15. Vorrichtung (1) zum Positionieren nach Anspruch 2, **dadurch gekennzeichnet, dass** das Haltemittel (9) und/oder das Steuermittel (10) drehbar an dem Körper (4) angebracht ist.

16. Vorrichtung (1) zum Positionieren nach einem der vorhergehenden Ansprüche, **dadurch gekennzeichnet, dass** sie einen Hebel (11) umfasst, der einerseits das Haltemittel (9) und andererseits das Steuermittel (10) umfasst, das sich in der Verlängerung dieses Haltemittels (9) befindet.

17. Vorrichtung (1) zum Positionieren nach den Ansprüchen 2 und 16, **dadurch gekennzeichnet, dass** der Hebel (11) drehbeweglich um eine Achse, die senkrecht zu der Achse ist, die sich entlang des Körpers (4) erstreckt, und/oder um eine Achse ist, die senkrecht zu einer Achse ist, die sich entlang der Vorrichtung (1) zum Positionieren erstreckt.

18. Vorrichtung (1) zum Positionieren nach einem der vorhergehenden Ansprüche, **dadurch gekennzeichnet, dass** sie ein zusätzliches Rückführmittel (12) umfasst, das zum Rückführen von wenigstens dem Haltemittel (9) von der aktiven Halteposition des Rückhaltemittels (7) in der aktiven Rückhalteposition des Ballasts (6) zu der aktiven Halteposition dieses Rückhaltemittels (7) konfiguriert ist.

19. Vorrichtung (1) zum Positionieren nach einem der vorhergehenden Ansprüche, **dadurch gekennzeichnet, dass** sie ein Mittel (13) zum Anbringen eines Spannungsprüfers umfasst.

20. Vorrichtung (1) zum Positionieren nach einem der vorhergehenden Ansprüche, **dadurch gekennzeichnet, dass** sie ein Mittel (14) zum Aufnehmen einer Betätigungsstange (15) umfasst.

## Claims

1. Positioning device (1) for positioning, in a manner straddling an electrical conductor (C) of an overhead electrical line, a placement means (5) for placing, on this electrical conductor (C), a system for grounding this electrical conductor (C), this positioning device (1) comprising:
- a distal part (D), a proximal part (P), and a middle part (M) arranged between the distal part (D) and the proximal part (P);
- a placement means (5) which at least the distal part (D) and the middle part (M) of the positioning device (1) comprises and which is designed to place the grounding system on the electrical conductor (C);
- a ballast (6) which the distal part (D) of the positioning device (1) comprises and which is associated with the placement means (5);
- a retaining means (7) which the distal part (D) of the positioning device (1) comprises, which is designed to retain the ballast (6) within the positioning device (1), and which can move between an active position for retaining this ballast (6) and an inactive position for retaining this ballast (6);
- a return means (8) which the distal part (D) and/or the middle part (M) of the positioning device (1) comprises and which is designed to return the means (7) for retaining the ballast (6) from the active position for retaining the ballast (6) and towards the inactive position for retaining the ballast (6);
- a holding means (9) which the distal part (D) and/or the middle part (M) of the positioning device (1) comprises, which is designed to hold the retaining means (7) in the active position for retaining the ballast (6), counter to the action of the return means (8), and which can move between an active position for holding the retaining means (7) in its active position for retaining the ballast (6) and an inactive position for holding this retaining means (7);
- a control means (10) which the middle part (M) of the positioning device (1) comprises and which is designed to control the movement of the holding means (9) from the active position for holding the retaining means (7) in the active position for retaining the ballast (6) towards the inactive position for holding the retaining means (7), under the influence of interaction with the electrical conductor (C).

2. Positioning device (1) according to claim 1, **characterized in that** it comprises a body (4) which has an elongate shape, which extends along an axis, and which the distal part (D), the proximal part (P) and the middle part (M) of the positioning device (1) comprise.

3. Positioning device (1) according to claim 2, **characterized in that** the body (4) comprises a first end portion (40) which at least the distal part (D) of the positioning device (1) comprises, a second end portion (41) which at least the proximal part (P) of the positioning device (1) comprises and which is opposite the first end portion (40), and an intermediate portion (42) which at least the middle part (M) of the positioning device (1) comprises and which is arranged between the first end portion (40) and the second end portion (41) of the body (4).

4. Positioning device (1) according to claim 3, **characterized in that** the first end portion (40) and/or the second end portion (41) and/or the intermediate portion (42) are made of an electrically insulating material.

5. Positioning device (1) according to claim 2, **characterized in that** the placement means (5) extends laterally relative to the body (4), externally relative to this body (4), and along this body (4), at least over part of the length of this body (4).

6. Positioning device (1) according to claim 2, **characterized in that** the placement means (5) extends along the body (4) at least in the distal part (D) and in the middle part (M) of the positioning device (1), and diverges with respect to this body (4) in the middle part (M) or in the proximal part (P) of this positioning device 1.

7. Positioning device (1) according to any one of the preceding claims, **characterized in that** the placement means (5) is made of an electrically insulating material and consists of a cable, a cord, a wire, a rope or the like.

8. Positioning device (1) according to claim 2, **characterized in that** the retaining means (7) can move in axial translation along an axis at least parallel to the axis along which the body (4) extends and/or at least parallel to an axis along which the positioning device (1) extends.

9. Positioning device (1) according to claim 3, **characterized in that** the first end portion (40) of the body (4) comprises, internally, the retaining means (7), and comprises an opening (400) through which this retaining means (7) can be accessed.

10. Positioning device (1) according to claim 3, **characterized in that** the first end portion (40) of the body (4) internally comprises the return means (8).

11. Positioning device (1) according to any one of the preceding claims, **characterized in that** the holding means (9) comprises a fork (90) which comprises two teeth (900, 901) which delimit a cradle (902) for receiving a complementary holding member (903) which is secured, for movement therewith, to the retaining means (7) in the inactive position for holding the retaining means (7), and one (900) of which teeth comprises a holding member (904) with which the complementary holding member (903) interacts in the active position for holding the retaining means (7).

12. Positioning device (1) according to any one of the preceding claims, **characterized in that** the control means (10) comprises a cradle (100) which is designed to receive the electrical conductor (C), which has an arcuate shape, and which has an opening oriented towards the outside of the positioning device (1).

13. Positioning device (1) according to claim 2, **characterized in that** the holding means (9) and the control means (10) extend externally and/or laterally with respect to the body (4), over part of the length of this body (4).

14. Positioning device (1) according to claim 2, **characterized in that** the holding means (9) and/or the control means (10) are rotatable about an axis perpendicular to the axis along which the body (4) extends and/or about an axis perpendicular to an axis along which the positioning device (1) extends.

15. Positioning device (1) according to claim 2, **characterized in that** the holding means (9) and/or the control means (10) are rotatably mounted on the body (4).

16. Positioning device (1) according to any one of the preceding claims, **characterized in that** it comprises a lever (11) which comprises both the holding means (9) and the control means (10) which is located in the extension of this holding means (9).

17. Positioning device (1) according to claims 2 and 16, **characterized in that** the lever (11) is rotatable about an axis perpendicular to the axis along which the body (4) extends and/or about an axis perpendicular to an axis along which the positioning device (1) extends.

18. Positioning device (1) according to any one of the preceding claims, **characterized in that** it comprises an additional return means (12) which is designed to return at least the holding means (9) from the inactive position for holding the retaining means (7) in the active position for retaining the ballast (6) towards the active position for holding this retaining means (7).

19. Positioning device (1) according to any one of the preceding claims, **characterized in that** it comprises a means (13) for mounting a voltage detector.

20. Positioning device (1) according to any one of the preceding claims, **characterized in that** it comprises a means (14) for receiving an operating rod (15).
